# EUROPÄISCHE PATENTSCHRIFT

(11) **EP 1 821 260 B1**
(45) Veröffentlichungstag und Bekanntmachung des Hinweises auf die Patenterteilung: **01.05.2019**
(21) Anmeldenummer: 07001434.5
(22) Anmeldetag: 24.01.2007
(51) Int. Cl.: G07C 5/08, H04M 1/60

(54) **Verfahren zur Unterstützung der Fehlersuche für ein Kraftfahrzeug**
Method for supporting fault detection for a motor vehicle
Procédé d'assistance à la recherche de panne pour un véhicule automobile

(30) Priorität: 09.02.2006 DE 102006005942
(43) Veröffentlichungstag der Anmeldung: 22.08.2007
(73) Patentinhaber: Bayerische Motoren Werke Aktiengesellschaft, 80809 München (DE)
(72) Erfinder: Sykora, Thomas, 81247 München (DE); Kiefer, Tobias, 80995 München (DE); Chartier, Anne-Laure, 81371 München (DE); Hneini, Nizar, 80937 München (DE)

(56) Entgegenhaltungen:
- EP-A2- 1 168 784
- WO-A1-01/08387
- WO-A2-00/72463
- DE-A1- 10 134 717
- US-A- 5 715 522
- US-A1- 2002 142 803
- US-A1- 2003 125 851
- US-A1- 2004 246 607
- US-A1- 2004 259 499
- US-A1- 2005 277 445
- US-A1- 2007 178 944
- US-B1- 7 123 878
- "NOKIA - WIRELESS CAR KIT : PAIRING AND SHARING", INTERNET CITATION, 16. April 2003 (2003-04-16), XP002296728, Gefunden im Internet: URL:http://web.archive.org/web/20030416031 205/http:77www.nokia.com/nokia/0,4879,4917 ,00.html [gefunden am 2004-09-16]

## Beschreibung

Die Erfindung betrifft ein Verfahren zur Unterstützung der Fehlersuche für ein Kraftfahrzeug.

Mit der informationstechnischen Komplexität heutiger Kraftfahrzeuge steigt bisweilen auch die Gefahr von Fehlfunktionen. Umso wichtiger ist das Treffen von Maßnahmen zur Begünstigung einer einfachen und geradlinigen Fehlersuche sowie eventuell erforderlicher Abhilfemaßnahmen. Die informationstechnische Komplexität steigt insbesondere dann an, wenn außerhalb des Einflussbereichs des Fahrzeugherstellers Zubehör an ein Kraftfahrzeug bzw. seine Komponenten ankoppelbar sein soll. Aus dem Stand der Technik sind verschiedenste Verfahren und Vorrichtungen zur Kopplung von Zubehörgeräten, insbesondere Telekommunikationsgeräten, mit Kraftfahrzeugen bekannt. Ein häufiger Fall ist die Kopplung eines Mobiltelefons mit einer Freisprecheinrichtung eines Kraftfahrzeugs. Um eine zuverlässige Funktion im vorgesehenen Umfang darstellen zu können, muss das jeweilige Mobiltelefon gewissen Kompatibilitätsanforderungen bezüglich des Kraftfahrzeugs bzw. bezüglich derjenigen Einrichtung des Kraftfahrzeugs, an die es angekoppelt wird, genügen.

Die Kopplung von Mobilgeräten, insbesondere Mobiltelefonen, mit Fahrzeugeinrichtungen, insbesondere Freisprecheinrichtungen, insbesondere mittels des Bluetooth-Protokolls, ist Gegenstand der Druckschriften DE 101 34 717 A1, WO 00/72463 A2, WO 01/08387 A1, US 2005/0277445 A1, US 7123878 B1, US 2004/0246607 A1 sowie EP 1 168 784 A2.

Obwohl Fahrzeughersteller ihre Kunden in der Regel nach Kräften über empfohlene Geräte aufklären, werden häufig auch ungeeignete Mobiltelefone durch einen Benutzer mit dem Kraftfahrzeug gekoppelt. Die in einem solchen Fall ausbleibende, unzuverlässige oder nicht in vollem Umfang gewährleistete Funktion des Zusammenwirkens zwischen Mobiltelefon und Kraftfahrzeug führt in vielen Fällen zu Beanstandungen des Kunden und/oder zu einer aufwändigen Fehlersuche, gegebenenfalls sogar zu Reparaturarbeiten.

Herkömmliche Diagnosetester, wie sie beispielsweise US 2003/0125851 A1 offenbart, werden zum Auslesen und Anzeigen von bei der Fahrzeugeigendiagnose (On-board-Diagnose, OBD) durch das Fahrzeug erstellten Fehlermeldungen (diagnostic trouble code, DTC) genutzt.

Aufgabe der Erfindung ist es, ein einfaches Verfahren zu schaffen, durch welches die Analyse von Fehlern bei der Kopplung eines Zubehörgeräts mit einer Einrichtung eines Kraftfahrzeugs erleichtert wird.

Die Aufgabe wird erfindungsgemäß gelöst durch ein Verfahren mit den Merkmalen des Anspruchs 1. Vorteilhafte Ausführungsformen und Weiterbildungen der Erfindung ergeben sich aus den abhängigen Ansprüchen.

Die Erfindung wird im Folgenden für den Fall der Ankopplung eines als Mobiltelefon ausgebildeten Zubehörgeräts an das Kraftfahrzeug erläutert. Der Gedanke der Erfindung schließt jedoch auch die Ankopplung anderer Zubehörgeräte (z.B. Smartphone, Video-Player, MP3-Player, USB-Stick, Notebook, PDA) mit ein.

Der Erfindung liegt der Gedanke zugrunde, dauerhaft erkennbar zu machen, welche Mobiltelefone mit der Einrichtung des Kraftfahrzeugs gekoppelt wurden, indem entsprechende Daten bei dem Kraftfahrzeug abgelegt werden. Somit kann auch zu einem späteren Zeitpunkt einfach geprüft werden, ob ein nicht bzw. nicht im gewünschten Umfang funktionierendes Gerät überhaupt mit der jeweiligen Einrichtung des Kraftfahrzeugs kompatibel ist und somit ordnungsgemäß funktionieren sollte. Zu diesem Zweck sind bereits bei bestehender Kopplung entsprechende servicerelevante Daten angekoppelter Geräte bei dem Kraftfahrzeug abzulegen.

Die spätere Verfügbarkeit der Daten ist insbesondere deshalb vorteilhaft, da die Fehlersuche in einem Servicebetrieb häufig auf Basis einer verbalen Beschreibung in der Vergangenheit aufgetretener Fehlfunktionen beruht.

Erfindungsgemäß werden Kenndaten eines mit einer Einrichtung des Kraftfahrzeugs gekoppelten Mobiltelefons in einer in dem Kraftfahrzeug angeordneten Speichereinheit abgelegt. Die Daten stehen somit für ein späteres Auslesen und/oder einen späteren Vergleich zur Verfügung.

Durch die Verfügbarkeit der Kenndaten wird einerseits die spätere Fehlersuche erleichtert. Außerdem kann durch die Erfindung die Verantwortlichkeit für eventuelle Fehlersuche- und/oder Reparaturmaßnahmen geklärt werden. So können etwa einem vorsätzlichen oder fahrlässigen Verursacher der Kopplung eines inkompatiblen Gerätes die Kosten für nachfolgende Fehlersuche- und/oder Reparaturmaßnahmen auferlegt werden. Kunden können umgekehrt gegenüber dem Hersteller und/oder einem Servicebetrieb nachweisen, dass ausschließlich kompatible Geräte gekoppelt wurden und somit Ihren Anspruch auf Gewährleistung belegen. Auch die Aufteilung einer Kostenübernahme zwischen Servicebetrieb und Hersteller kann unter Berücksichtigung des Wissens um die Kenndaten angeschlossener Geräte erfolgen.

Bei den Kenndaten kann es sich insbesondere um Angaben zu Hersteller, Modell, Software-Version und/oder Hardware-Version des Mobiltelefons handeln. Anhand solcher Daten ist in der Regel eindeutig feststellbar, ob es sich bei dem Gerät um ein objektiv bzw. nach Herstellerangaben kompatibles Gerät handelt. Solche Kenndaten sind von einem Mobiltelefon in der Regel über Standardbefehle (z.B. in GSM 07.07 definierte AT-Befehle) abfragbar. Unter Verwendung geeigneter Konvertierungsalgorithmen sind dabei auch nicht standardisierte Antwortformate verarbeitbar.

Gemäß einer bevorzugten Ausführungsform der vorliegenden Erfindung handelt es sich bei der Einrichtung des Kraftfahrzeugs, mit der das Mobiltelefon gekoppelt wird, um eine Freisprecheinrichtung. Vorzugsweise ist diese Freisprecheinrichtung herstellerseitig in dem Kraftfahrzeug vorgesehen. Die Erfindung ist jedoch auch auf die Kopplung von Mobiltelefonen mit Kraftfahrzeugkomponenten für andere aus dem Stand der Technik bekannte Anwendungen übertragbar. Die Einrichtung des Kraftfahrzeugs, mit der das Mobiltelefon gekoppelt wird, kann mehrere Teilkomponenten umfassen.

Das Mobiltelefon wird bevorzugt schnurlos (z. B. via Bluetooth) mit der Einrichtung des Kraftfahrzeugs gekoppelt.

Vorzugsweise, jedoch nicht notwendigerweise, ist die Speichereinheit, in der die Kenndaten abgelegt werden, derjenigen Einrichtung des Kraftfahrzeugs zugeordnet, mit der das Mobiltelefon unmittelbar gekoppelt wird. Unter anderem zu Gunsten einer kompakten Bauweise kann die Speichereinheit insbesondere in diese Einrichtung (z.B. Steuergerät der Freisprecheinrichtung) integriert sein. Die Ablage der Kenndaten kann jedoch beispielsweise auch in einer zentralen Speichereinheit des Kraftfahrzeugs erfolgen. Die Einrichtung des Kraftfahrzeugs, mit der das Mobiltelefon unmittelbar gekoppelt wird, kann die Kenndaten hierzu direkt oder indirekt an die zentrale Speichereinheit weiterleiten.

In der Speichereinheit kann auch ein eigener Speicherbereich für die Kenndaten reserviert sein.

Zur Abfrage der Kenndaten des Mobiltelefons wird erfindungsgemäß von der Einrichtung des Kraftfahrzeugs, mit der das Mobiltelefon unmittelbar gekoppelt ist, ein Abfragebefehl an das Mobiltelefon gesendet (z. B. AT-GSM-Befehl). Bei schnurloser Kopplung erfolgt die Übertragung des Abfragebefehls sowie die nachfolgende Übertragung der Kenndaten jeweils schnurlos.

Die Abfrage der Kenndaten von dem Mobiltelefon durch diese Einrichtung des Kraftfahrzeugs kann auch durch eine zweite, mit der unmittelbar gekoppelten Einrichtung kommunizierende, Einrichtung des Kraftfahrzeugs ausgelöst werden. Somit ist auch eine indirekte Abfrage der Kenndaten möglich. Die Kenndaten können dann beispielsweise von der unmittelbar gekoppelten Einrichtung abgefragt und an die zweite Einrichtung weitergeleitet werden.

Erfindungsgemäß werden die Kenndaten durch eine temporär mit dem Kraftfahrzeug verbundene Diagnoseeinrichtung aus der Speichereinheit ausgelesen. Eine solche temporär mit dem Kraftfahrzeug verbundene Diagnoseeinrichtung kann je nach Ausführungsform der Erfindung direkt oder indirekt mit der Speichereinheit bzw. der zugehörigen Einrichtung des Kraftfahrzeugs (z.B. Steuergerät der Freisprecheinrichtung) kommunizieren.

Zum Zeitpunkt des Auslesens ist das Mobiltelefon, dessen Kenndaten in der Speichereinheit abgelegt sind, typischerweise nicht mehr mit der Einrichtung des Kraftfahrzeugs gekoppelt. Dennoch kann anhand der Kenndaten beispielsweise Hersteller, Modell und Software-Version ermittelt werden.

Es kann vorteilhaft sein, die Kenndaten des Mobiltelefons nach dem Auslesen von einem ersten Datenformat in ein zweites Datenformat zu wandeln. Die Kenndaten können somit beispielsweise hinsichtlich ihrer textuellen Lesbarkeit aufbereitet werden. Etwa können Kenndaten zunächst als Hexadezimal-Code vorliegen und anschließend in eine Schriftzeichenfolge (z. B. Herstellername) gewandelt werden. Diese Wandlung kann in der Einrichtung, beispielsweise dem Steuergerät, des Kraftfahrzeugs erfolgen, welcher die Speichereinheit, in der die Kenndaten gespeichert sind, zugeordnet ist. Beispielsweise können entsprechende Wandlungsvorschriften in einer Steuergerätebeschreibungsdatei dieses Steuergeräts hinterlegt sein. Die Wandlung des Datenformats kann auch bereits vor oder bei der Abspeicherung der Kenndaten des Mobiltelefons in der Speichereinheit erfolgen. Die Kenndaten werden dann bereits in dem zweiten Datenformat abgelegt.

Erfindungsgemäß wird anhand der Kenndaten des Mobiltelefons die Kompatibilität des Mobiltelefons mit der Einrichtung des Kraftfahrzeugs, mit welcher das Mobiltelefon gekoppelt wurde, geprüft. Hierzu wird bevorzugt ein Abgleich der Kenndaten des Mobiltelefons mit Kenndaten zum Stand (Hardware und/oder Software) der Einrichtung des Kraftfahrzeugs vorgenommen. Ergebnis dieses Abgleichs ist dann eine Aussage zur Kompatibilität. Die Prüfung könnte, in einem nicht beanspruchten Beispiel, bereits bei der mit dem Mobiltelefon gekoppelten Einrichtung des Kraftfahrzeugs erfolgen, insbesondere wenn diese die Speichereinheit enthält, in welcher die Kenndaten abgelegt bzw. abzulegen sind; es könnte dann bereits ein Ergebnis der Kompatibilitätsprüfung, unter Umständen zusammen mit den zugrundeliegenden Kenndaten an die temporär verbundene Diagnoseeinrichtung gesendet werden. Erfindungsgemäß werden aber stattdessen zunächst nur die Kenndaten an die Diagnoseeinrichtung übertragen, welche die Kompatibilitätsprüfung dann selbst durchführt. Die Kompatibilitätsprüfung erfolgt durch einen Vergleich der Kenndaten mit einer Referenztabelle, in welcher kompatible und ggf. auch inkompatible Geräte verzeichnet sind und welche bei der Diagnoseeinrichtung zu hinterlegen ist.

Das Ergebnis der Kompatibilitätsprüfung wird durch eine mit der Diagnoseeinrichtung verbundene Anzeigeeinheit zur Anzeige gebracht. Dem Personal eines Servicebetriebs ist es auf diese Weise einfach und schnell möglich, herauszufinden, welche Mobiltelefone in der Vergangenheit angekoppelt wurden sowie ob die angekoppelten Mobiltelefone mit dem Kraftfahrzeug bzw. dessen Einrichtungen kompatibel sind. Für inkompatible Geräte kann die Fehlersuche somit beispielsweise abgekürzt oder ganz abgebrochen werden. Als Maßstab für die Kompatibilität können beispielsweise die Angaben einer einem Kunden zur Verfügung gestellten Gebrauchsanleitung dienen.

Gemäß einer Weiterbildung der Erfindung wird das Ergebnis der Kompatibilitätsprüfung an ein System zur Fehleranalyse und/oder Kundenberatung und/oder Rechnungsstellung weitergeleitet und von diesem berücksichtigt. Somit kann ein Kunde eines Servicebetriebs beispielsweise gezielt darauf hingewiesen werden, dass er ein inkompatibles Gerät verwendet und somit Fehlfunktionen zu erwarten sind bzw. dass er solche Fehlfunktionen selbst zu verantworten hat. Es kann - wiederum auf Basis des Ergebnisses der Kompatibilitätsprüfung - sogar bei einer voll- oder teilautomatischen Erstellung von Rechnungen in einem Servicebetrieb berücksichtigt werden, ob eine eventuell in Rechnung zu stellende Fehlersuche oder Reparaturmaßnahme auf die Verwendung eines inkompatiblen Geräts zurückzuführen ist. Gegebenenfalls können dabei auch Angaben zu im Fahrzeug abgespeicherten und durch eine Diagnoseeinrichtung ausgelesenen Fehlern, Angaben zu vom Servicepersonal entdeckten Fehlern bzw. durchgeführten Arbeiten und/oder Angaben zu im Fahrzeug vorhandenen Bauteilnummern mit einer Fehlerdatenbank abgeglichen werden.

Das Auslesen der Kenndaten angeschlossener Mobiltelefone kann dem Hersteller auch zu statistischen Zwecken dienen. Beispielsweise sind bei entsprechend großer Datenbasis Rückschlüsse auf die Beliebtheit einzelner Hersteller und Modelle möglich. Je nach Gesetzeslage ist hierzu ggf. die Zustimmung des Kunden einzuholen. Die gewonnenen Erkenntnisse können beispielsweise für Marketing-Zwecke wertvoll sein. Außerdem kann die Entwicklung spezieller technischer Leistungsmerkmale für die Unterstützung beliebter Modelle bzw. eine Beendigung der Unterstützung selten genutzter Modelle erwogen werden.

Stellvertretend für verschiedenste mit Einrichtungen eines Kraftfahrzeugs koppelbare Zubehörgeräte werden in der vorliegenden Beschreibung der Erfindung weitestgehend nur Mobiltelefone ausdrücklich erwähnt. Die Erfindung ist jedoch problemlos auch auf andere Arten von Zubehörgeräten, insbesondere andere Telekommunikationsgeräte (z.B. Smartphones), aber auch auf Medienwiedergabegeräte (z.B. MP3-Player), Speichergeräte (z.B. USB-Stick) tragbare Computer (z.B. Notebook oder PDA) und dergleichen anwendbar. Der Gedanke der Erfindung umfasst somit auch die Verwendung solcher Geräte anstelle des in der vorliegenden Beschreibung explizit genannten Mobiltelefons.

Anhand der beigefügten Zeichnungen wird im Folgenden eine bevorzugte Ausführungsform der Erfindung näher beschrieben. Dabei zeigt
- Fig. 1: einen Signalflussplan für die erfindungsgemäße Speicherung von Kenndaten eines Mobiltelefons in einer Speichereinheit einer Freisprecheinrichtung in einem Kraftfahrzeug und
- Fig. 2: einen Signalflussplan für das Auslesen gespeicherter Kenndaten aus derselben Speichereinheit.

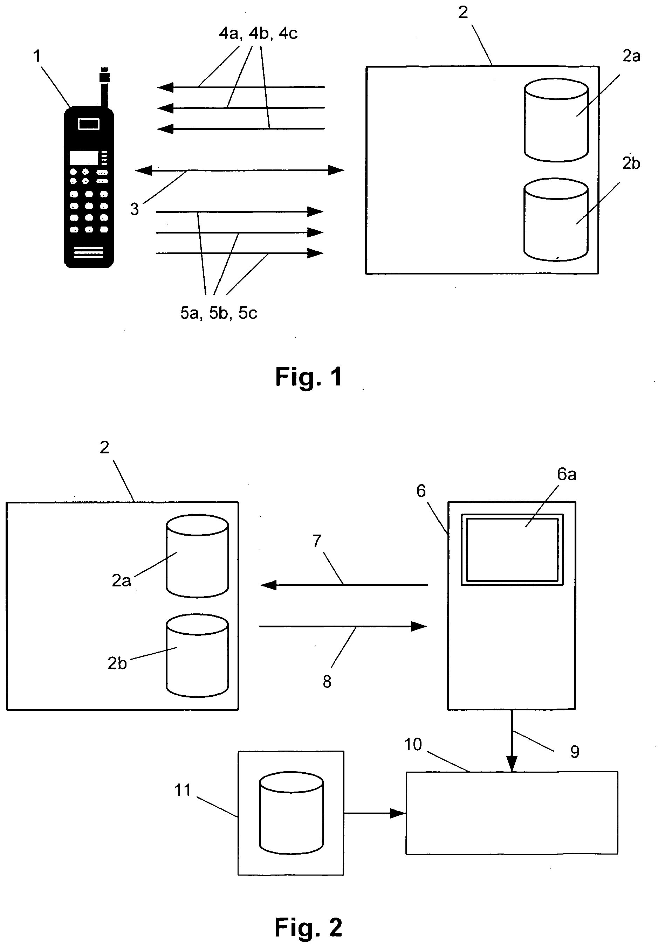

Fig. 1 zeigt einen Signalflussplan für eine bevorzugte Ausführungsform der erfindungsgemäßen Speicherung von Kenndaten eines Mobiltelefons in einer Speichereinheit einer Freisprecheinrichtung in einem Kraftfahrzeug. Das Mobiltelefon 1 wird über eine Bluetooth-Schnittstelle mit dem Steuergerät 2 einer Freisprecheinrichtung eines Kraftfahrzeugs gekoppelt. Das Mobiltelefon 1 besitzt hierzu eine integrierte Bluetooth-Antenne, das Steuergerät 2 ist mit einer externen Bluetooth-Antenne verbunden, die - ebenso wie andere Bestandteile der Freisprecheinrichtung - nicht eigens grafisch dargestellt sind. Der Doppelpfeil 3 verdeutlicht die Kommunikation zu Telephonie-Zwecken.

Sobald eine erstmalige Kopplung mit einem Mobiltelefon zustande kommt, sendet das Steuergerät 2 drei AT-GSM-Befehle 4a, 4b, 4c an das jeweilige Mobiltelefon, hier das Mobiltelefon 1. Durch die AT-GSM-Befehle werden Hersteller-Identifikationscode, Modell-Identifikationscode und Software-Version des Mobiltelefons 1 abgefragt. Das Mobiltelefon 1 sendet als Antwort den Hersteller-Identifikationscode 5a, den Modell-Identifikationscode 5b und den Code 5c für die Software-Version, jeweils als Hexadezimalcode.

Das Steuergerät 2 wandelt die empfangenen Hexadezimalcodes gemäß einem im Steuergerät abgelegten Konvertierungsalgorithmus jeweils in eine Schriftzeichenkette (jeweils ein String für Herstellername, Modellname und Software-Version) um und legt diese in der Speichereinheit 2a ab. Der Konvertierungsalgorithmus vergleicht die empfangenen Hexadezimalcodes hierzu ganz oder teilweise mit zu Vergleichszwecken bereitgehaltenen Vergleichscodes. Wird eine Übereinstimmung zwischen einem eingelesenen Hexadezimalcode und einem der bereitgehaltenen Vergleichscodes festgestellt, wird eine dem jeweiligen Vergleichscode zugeordnete Schriftzeichenkette abgelegt. Wird hingegen kein passender Vergleichscode gefunden, wird der Hexadezimalcode ohne weitere Konvertierung abgelegt. Der Konvertierungsalgorithmus erlaubt es somit, zumindest für bekannte Telefonmodelle "lesbare" Schriftzeichenketten als Kenndaten abzulegen.

Zudem werden zusammen mit den Kenndaten des Mobiltelefons weitere Zusatzdaten abgespeichert (hier z.B. Datum, Uhrzeit und Kilometerstand des Kraftfahrzeugs).

Die Speichereinheit 2a kann auf die beschriebene Art und Weise Herstellername, Modellname und Software-Version für bis zu vier Mobiltelefone speichern, die in der Vergangenheit mit der Freisprecheinrichtung gekoppelt wurden. Wird eine größere Zahl unterschiedlicher Mobiltelefone angekoppelt, werden die älteren Speichereinträge überschrieben.

Neue Kenndaten-Einträge in der Speichereinheit 2a können in einem nicht beanspruchten Beispiel, durch das Steuergerät 2 zudem mit einer in der Steuergerätebeschreibungsdatei 2b hinterlegten Referenztabelle verglichen werden. Es sei angemerkt, dass erfindungsgemäß die Kompatibilitätsprüfung in der Diagnoseeinrichtung 6 durch einen Vergleich der Kenndaten 5a, 5b, 5c mit einer bei der Diagnoseeinrichtung hinterlegten Referenztabelle erfolgt. Die Referenztabelle enthält alle als kompatibel definierten Kombinationen aus Herstellername, Modellname und Software-Version. Sofern im nicht beanspruchten Beispiel, ein Mobiltelefon als Ergebnis des Vergleichs als kompatibel erachtet wird, wird bei dem entsprechenden Kenndatensatz in der Speichereinheit 2a ein entsprechendes Kompatibilitäts-Bit gesetzt.

Fig. 2 zeigt einen Signalflussplan für das Auslesen der gespeicherten Kenndaten aus der Speichereinheit 2a des Steuergeräts 2.

An die Diagnosebuchse des Kraftfahrzeugs wird temporär ein Diagnosetester 6 angeschlossen. Nach Anschluss ist dieser in der Lage mit dem Steuergerät 2 bilateral zu kommunizieren.

Der Diagnosetester 6 sendet einen Diagnosebefehl 7 an das Steuergerät 2. Der Diagnosebefehl 7 betrifft die in der Speichereinheit 2a abgelegten Kenndatensätze. Die Kenndatensätze werden nun an den Diagnosetester als Signal 8 übermittelt.

Der Diagnosetester 6 ist geeignet, aus den empfangenen Kenndatensätzen eine Liste angeschlossener Mobiltelefone zu erstellen und auf seinem Monitor 6a auszugeben. Inkompatible Geräte werden dabei gesondert ausgewiesen.

Der Diagnosetester 6 ist ferner geeignet, das Vorhandensein inkompatibler Mobiltelefone, als Signal 9 an ein System 10 zur automatischen Rechnungsstellung zu melden. Das System 10 zur Rechnungsstellung kann somit ein Verschulden bezüglich einer eventuell erforderlichen Fehlersuche oder Reparaturmaßnahme berücksichtigen. Dabei nutzt es auch Daten einer Fehlerdatenbank 11.

## Patentansprüche

1. Verfahren zur Unterstützung der Fehlersuche für ein Kraftfahrzeug,
bei welchem ein Zubehörgerät (1) mit einer Einrichtung (2) des Kraftfahrzeugs gekoppelt wird und Kenndaten (5a, 5b, 5c) des gekoppelten Zubehörgeräts (1) in einer in dem Kraftfahrzeug angeordneten Speichereinheit (2a) abgelegt werden,
wobei zum Auslesen der Kenndaten (5a, 5b, 5c) des Zubehörgeräts (1) ein Abfragebefehl (4a, 4b, 4c) von der Einrichtung (2) des Kraftfahrzeugs, mit der das Zubehörgerät (1) gekoppelt ist, an das Zubehörgerät (1) gesendet wird,
**dadurch gekennzeichnet, dass**
die Kenndaten (5a, 5b, 5c) durch eine temporär mit dem Kraftfahrzeug verbundene Diagnoseeinrichtung (6) aus der Speichereinheit (2a) ausgelesen werden,
anhand der Kenndaten (5a, 5b, 5c) die Kompatibilität des Zubehörgeräts (1) mit der Einrichtung (2) des Kraftfahrzeugs geprüft wird,
die Kompatibilitätsprüfung in der Diagnoseeinrichtung (6) durch einen Vergleich der Kenndaten (5a, 5b, 5c) mit einer bei der Diagnoseeinrichtung (6) hinterlegten Referenztabelle erfolgt, in welcher kompatible und gegebenenfalls auch inkompatible Geräte verzeichnet sind und
das Ergebnis der Kompatibilitätsprüfung durch eine mit der Diagnoseeinrichtung (6) verbundene Anzeigeeinheit (6a) zur Anzeige gebracht wird.

2. Verfahren nach Anspruch 1, **dadurch gekennzeichnet, dass** das Zubehörgerät als Mobiltelefon (1) ausgebildet ist und es sich bei dem Abfragebefehl um einen AT-GSM-Standardbefehl (4a, 4b, 4c) handelt.

3. Verfahren nach Anspruch 2, **dadurch gekennzeichnet, dass** die Kenndaten Angaben zu Hersteller (5a), Modell (5b), Software-Version (5c) und / oder Hardware-Version des Mobiltelefons (1) umfassen, wobei zum Auslesen der Kenndaten (5a, 5b, 5c) des Mobiltelefons (1) je ein Abfragebefehl (4a, 4b, 4c) von der Einrichtung (2) des Kraftfahrzeugs, mit der das Mobiltelefon (1) gekoppelt ist, an das Mobiltelefon (1) gesendet wird, sobald eine erstmalige Kopplung mit dem Mobiltelefon (1) zustande kommt.

4. Verfahren nach einem der vorhergehenden Ansprüche, **dadurch gekennzeichnet, dass** die Speichereinheit (2a), in der die Kenndaten (5a, 5b, 5c) abgelegt werden, der Einrichtung (2) des Kraftfahrzeugs zugeordnet ist, mit der das Zubehörgerät (1) gekoppelt wird.

5. Verfahren nach einem der vorhergehenden Ansprüche, **dadurch gekennzeichnet, dass** die Einrichtung des Kraftfahrzeugs, mit der das Zubehörgerät (1) gekoppelt wird, eine Freisprecheinrichtung (2) ist.

6. Verfahren nach einem der vorhergehenden Ansprüche, **dadurch gekennzeichnet, dass** das Zubehörgerät (1) schnurlos mit der Einrichtung (2) des Kraftfahrzeugs gekoppelt wird.

7. Verfahren nach einem der vorhergehenden Ansprüche, **dadurch gekennzeichnet, dass** die Kenndaten (5a, 5b, 5c) des Zubehörgeräts (1) nach dem Auslesen von einem ersten Datenformat in ein zweites Datenformat gewandelt werden.

8. Verfahren nach einem der vorhergehenden Ansprüche, **dadurch gekennzeichnet, dass** das Ergebnis der Kompatibilitätsprüfung an ein System (10) zur Fehleranalyse und/oder Kundenberatung und/oder Rechnungsstellung weitergeleitet und von diesem berücksichtigt wird.

## Claims

1. A method for assisting in error detection for a motor vehicle,
in which an accessory device (1) is coupled to a device (2) of the motor vehicle and characteristic data (5a, 5b, 5c) of the coupled accessory device (1) are stored in a memory unit (2a) arranged in the motor vehicle,
wherein, in order to read the characteristic data (5a, 5b, 5c) of the accessory device (1), a query command (4a, 4b, 4c) is sent to the accessory device (1) from the device (2) of the motor vehicle to which the accessory device (1) is coupled,
**characterised in that**
the characteristic data (5a, 5b, 5c) are read from the memory unit (2a) by a diagnostic device (6) temporarily connected to the motor vehicle,
the compatibility of the accessory device (1) with the device (2) of the motor vehicle is checked on the basis of the characteristic data (5a, 5b, 5c),
the compatibility check in the diagnostic device (6) is performed by comparing the characteristic data (5a, 5b, 5c) with a reference table which is stored in the diagnostic device (6) and in which compatible and, possibly, incompatible devices are listed, and
the result of the compatibility check is displayed by a display unit (6a) connected to the diagnostic device (6).

2. A method according to claim 1, **characterised in that** the accessory device is configured as a mobile telephone (1) and the query command is an AT-GSM standard command (4a, 4b, 4c).

3. A method according to claim 2, **characterised in that** the characteristic data comprise details regarding the manufacturer (5a), model (5b), software version (5c) and/or hardware version of the mobile telephone (1), wherein, in order to read the characteristic data (5a, 5b, 5c) of the mobile telephone (1), a query command (4a, 4b, 4c) is sent to the mobile telephone (1) from the device (2) of the motor vehicle to which the mobile telephone (1) is coupled, as soon as the mobile telephone (1) is coupled for the first time.

4. A method according to any one of the preceding claims, **characterised in that** the memory unit (2a) in which the characteristic data (5a, 5b, 5c) are stored is assigned to the device (2) of the motor vehicle to which the accessory device (1) is coupled.

5. A method according to any one of the preceding claims, **characterised in that** the device of the motor vehicle to which the accessory device (1) is coupled is a hands-free device (2).

6. A method according to any one of the preceding claims, **characterised in that** the accessory device (1) is coupled wirelessly to the device (2) of the motor vehicle.

7. A method according to any one of the preceding claims, **characterised in that** the characteristic data (5a, 5b, 5c) of the accessory device (1) are converted from a first data format into a second data format after having been read.

8. A method according to any one of the preceding claims, **characterised in that** the result of the compatibility check is forwarded to a system (10) for error analysis and/or customer consultation and/or invoice billing, and is taken into account by said system.

## Revendications

1. Procédé d'assistance à la recherche de défaut dans un véhicule selon lequel un appareil accessoire (1) est couplé à un dispositif (2) du véhicule et des caractéristiques (5a, 5b, 5c) de l'appareil accessoire couplé (1) sont déposées dans une unité de mémoire (2a) installée dans le véhicule, pour permettre d'extraire les caractéristiques (5a, 5b, 5c) de l'appareil accessoire (1), une commande de requête (4a, 4b, 4c) est transmise à l'appareil accessoire (1) par le dispositif (2) du véhicule avec lequel est couplé cet appareil accessoire (1),
**caractérisé en ce que**
les caractéristiques (5a, 5b, 5c) sont extraites de l'unité de mémoire (2a) par un dispositif de diagnostic (6) relié de façon temporaire au véhicule, à partir des caractéristiques (5a, 5b, 5c) la compatibilité de l'appareil accessoire (1) avec le dispositif (2) du véhicule est contrôlée,
le contrôle de la compatibilité est effectué dans l'installation de diagnostic (6) par une comparaison des caractéristiques (5a, 5b, 5c) avec un tableau de référence déposé dans le dispositif de diagnostic (6) et dans lequel des appareils compatibles et le cas échéant également des appareils incompatibles sont enregistrés, et
le résultat du contrôle de la compatibilité est indiqué par une unité d'affichage (6a) reliée au dispositif de diagnostic (6).

2. Procédé conforme à la revendication 1,
**caractérisé en ce que**
l'appareil accessoire est réalisé sous la forme d'un téléphone mobile (1) et la commande de requête est une commande standard AT-GSM (4a, 4b, 4c).

3. Procédé conforme à la revendication 2,
**caractérisé en ce que**
les caractéristiques comportent des indications concernant le fabricant (5a), le modèle (5b), la version de logiciel (5c) et/ou la version du hardware du téléphone mobile (1), et pour permettre d'extraire les caractéristiques (5a, 5b, 5c) du téléphone mobile (1), une commande de requête (4a, 4b, 4c) est respectivement transmise au téléphone mobile (1) par le dispositif (2) du véhicule avec lequel le téléphone mobile (1) est couplé dès que pour la première fois un couplage avec le téléphone mobile (1) se produit.

4. Procédé conforme à l'une des revendications précédentes,
**caractérisé en ce que**
l'unité de mémoire (2a) dans laquelle sont déposées les caractéristiques (5a, 5b, 5c) est associée au dispositif (2) du véhicule avec lequel l'appareil accessoire (1) est couplé.

5. Procédé conforme à l'une des revendications précédentes,
**caractérisé en ce que**
le dispositif du véhicule avec lequel est couplé l'appareil accessoire (1) est un dispositif main libre (2).

6. Procédé conforme à l'une des revendications précédentes,
**caractérisé en ce que**
l'appareil accessoire (1) est couplé par une liaison sans fil avec le dispositif (2) du véhicule.

7. Procédé conforme à l'une des revendications précédentes,
**caractérisé en ce que**
les caractéristiques (5a, 5b, 5c) de l'appareil accessoire (1) sont transformées d'un premier format dans un second format après leur extraction.

8. Procédé conforme à l'une des revendications précédentes,
**caractérisé en ce que**
le résultat du contrôle de la compatibilité est transmis à un système (10) d'analyse de défauts et/ou un service clients et/ou un poste de facturation et est pris en considération par celui-ci.
